# EUROPEAN PATENT APPLICATION

(11) **EP 4 621 583 A1**
(43) Date of publication of application: **24.09.2025**
(21) Application number: 23910540.6
(22) Date of filing: 25.12.2023
(51) Int. Cl.: G06F 13/24, G06F 13/40, G06F 13/38

(54) **INTERRUPT REPORTING METHOD, AND INTERRUPT CONFIGURATION METHOD AND APPARATUS**

(30) Priority: 28.12.2022 CN 202211706188
(71) Applicant: Huawei Technologies Co., Ltd., Shenzhen, Guangdong 518129 (CN)
(72) Inventor: QIU, Zhenfa, Shenzhen, Guangdong 518129 (CN)
(74) Representative: Huawei European IPR
(86) International application number: PCT/CN2023/141685
(87) International publication number: WO 2024/140615

(57) **Abstract**

This application discloses an interrupt reporting method and apparatus, and an interrupt configuration method and apparatus. The interrupt reporting method is applied to a node device that performs communication through a bus system, and the node device includes an interrupt vector table and an interrupt address table. The method includes: obtaining an interrupt event (S710), generating an interrupt message of the interrupt event, where the interrupt message includes an interrupt vector and an interrupt address, the interrupt vector is obtained from the interrupt vector table, and the interrupt address is obtained from the interrupt address table (S720); and sending the interrupt message to a network node through the bus system (S730). According to this application, less storage space is required by interrupt data of the interrupt event on the node device, so that more interrupts can be supported by the node device. This improves service operation efficiency.

## Description

This application claims priority to Chinese Patent Application No. 202211706188.2, filed with the China National Intellectual Property Administration on December 28, 2022, and entitled "INTERRUPT REPORTING METHOD AND APPARATUS,AND INTERRUPT CONFIGURATION METHOD AND APPARATUS", which is incorporated herein by reference in its entirety.

### TECHNICAL FIELD

This application relates to the field of interrupt mechanism technologies in a computer system, and in particular, to an interrupt reporting method and apparatus, and an interrupt configuration method and apparatus.

### BACKGROUND

In a computer system, a high-speed serial computer expansion bus standard (Peripheral Component Interconnect Express, PCIe) interface is a main manner used between an external device and a system on a chip (System on Chip, SoC). For a production-consumption software model usually used by the PCIe external device, many services on the external device depend on interrupt events, and an independent service corresponds to an independent interrupt event, to improve efficiency.

In an interrupt mechanism of an existing PCIe protocol, an interrupt message on a node device is reported by sending a packet to an interrupt controller of a host host in a manner of memory write memory write, where the packet carries an interrupt vector number of an interrupt event. In this interrupt mechanism, interrupt data of each interrupt event needs to be recorded in the node device in advance. For example, in an existing message signaled interrupt extended (Message Signaled Interrupt extended, MSI-X) mechanism, interrupt data of each interrupt event is stored in memory-mapped input/output (Memory mapping Input/Output, MMIO) space on a node device. A size of storage space for storing the interrupt data of each interrupt event is 128 bits. Currently, to meet increasing task requirements of the node device, the node device has an increasing requirement for a quantity of interrupt events.

However, currently, space used by a main chip on the node device to store the interrupt data of the interrupt event is limited in capacity, and cannot store interrupt data of a large quantity of interrupt events, that is, cannot store a large quantity of interrupt events. Consequently, when a service on the node device uses an interrupt, an aggregated interrupt event is used, resulting in reduced service efficiency.

### SUMMARY

Embodiments of this application provide an interrupt reporting method and apparatus, and an interrupt configuration method and apparatus, to make storage space required by interrupt data of an interrupt event on a node device less, and more interrupts can be supported by the node device. This improves service operation efficiency.

According to a first aspect, this application provides an interrupt reporting method, applied to a node device that performs communication through a bus system. The node device includes an interrupt vector table and an interrupt address table. The method includes: obtaining an interrupt event, generating an interrupt message of the interrupt event, where the interrupt message includes an interrupt vector and an interrupt address, the interrupt vector is obtained from the interrupt vector table, and the interrupt address is obtained from the interrupt address table; and sending the interrupt message to a network node through the bus system.

From the perspective of technical effect, the interrupt vector and the interrupt address in the interrupt message of the interrupt event are respectively stored in the interrupt vector table and the interrupt address table, that is, the interrupt address is separately stored. Generally, different interrupt events correspond to a same interrupt address. Therefore, for multiple interrupt events corresponding to a same interrupt address, the multiple interrupt events may share the same interrupt address. Compared with a conventional technology in which an interrupt address and an interrupt vector are stored in a same table, and an interrupt address corresponding to each interrupt event needs to be stored in a corresponding entry entry once, in this application, storage space of interrupt data of the interrupt event can be effectively saved. In addition, the node device can support more interrupts with a given capacity of the storage space of the node device, thereby improving service operation efficiency.

In a feasible implementation, the interrupt vector table includes multiple first entries entries each including one interrupt vector and corresponding to one interrupt event; the interrupt address table includes at least one second entry entry each including one interrupt address; and the multiple first entries include M first entries, the M first entries correspond to M interrupt events, the M interrupt events correspond to a same second entry in the at least one second entry, and M is a positive integer greater than or equal to 2.

From the perspective of technical effect, in an interrupt mechanism of this application, the multiple interrupt events correspond to a same entry entry in the interrupt address table, that is, the multiple interrupt events share data such as the interrupt address in the same entry entry. However, in the conventional technology, the interrupt vector and the interrupt address are jointly stored in an interrupt vector table, each interrupt event corresponds to one entry in the interrupt vector table, and the entry includes the interrupt vector and the interrupt address. That is, in the conventional technology, even if multiple interrupt events correspond to a same interrupt address, an interrupt address corresponding to each interrupt event is stored once in an entry entry corresponding to the interrupt event. Therefore, compared with the conventional technology, for a same quantity of interrupt events, in this application, less storage space is required for storing interrupt data of these interrupt events, that is, the storage space can be effectively saved, and further more interrupts can be supported by the node device with the given capacity of the storage space of the node device, thereby improving service operation efficiency.

In a feasible implementation, the interrupt vector table includes an address index corresponding to the interrupt vector, and the interrupt address is obtained from the interrupt address table based on the address index.

From the perspective of technical effect, in this application, a relationship between the interrupt address table and the interrupt vector table is established based on the address index, so that in a process of generating the interrupt message of the interrupt event, the interrupt address required by the interrupt message can be quickly located based on the address index included in an entry in which the interrupt vector is located. In addition, in this application, an address index of each interrupt address is stored to replace storage of an interrupt address corresponding to each interrupt event in the conventional technology. Because storage space required for storing the address index is smaller than storage space required for storing the interrupt address, the storage space required for storing the interrupt data of the interrupt event can be effectively saved.

In a feasible implementation, each second entry further includes a destination number destination ID, and the destination ID indicates the network node to which the interrupt message including the destination ID is sent; and the interrupt message further includes the destination ID.

From the perspective of technical effect, the interrupt message includes the Dst ID indicating the network node to which the interrupt message is sent. In this way, the interrupt message can be sent to a network node on a local server or another server, to execute a corresponding interrupt. Compared with the conventional technology in which an interrupt message can be sent only between nodes in a local server, in this application, the interrupt mechanism may be extended to a distributed system, to improve universality and an application capability of the interrupt mechanism in this application.

In a feasible implementation, each second entry further includes a token token ID, and the token ID is used by the network node to perform security verification on the interrupt address; and the interrupt message further includes the token ID.

From the perspective of technical effect, the interrupt message further includes the token ID used to perform security verification on the address. In this way, after receiving the interrupt address, the receiver network node can perform security verification, thereby effectively ensuring data security.

In a feasible implementation, the node device includes one or more of the following: a graphics card, a hard disk, a network interface card, and an audio card.

According to a second aspect, this application provides an interrupt configuration method, applied to a host host that performs communication through a bus system. The method includes: generating a configuration message of an interrupt event, where the configuration message includes an interrupt vector and an interrupt address, the interrupt vector is configured in an interrupt vector table on a node device, the interrupt address is configured in an interrupt address table on the node device, and the node device communicates with the host through the bus system; and sending the configuration message to the node device through the bus system.

In a feasible implementation, the interrupt vector table includes multiple first entries entries each including one interrupt vector and corresponding to one interrupt event; the interrupt address table includes at least one second entry entry each including one interrupt address; and the multiple first entries include M first entries, the M first entries correspond to M interrupt events, the M interrupt events correspond to a same second entry in the at least one second entry, and M is a positive integer greater than or equal to 2.

In a feasible implementation, the interrupt vector table further includes an address index corresponding to the interrupt vector, and the address index points to the interrupt address in the interrupt address table.

In a feasible implementation, the configuration message further includes a destination number destination ID, the destination ID is configured in the interrupt address table, and the destination ID indicates a network node to which an interrupt message including the destination ID is sent; and each second entry further includes one destination ID.

In a feasible implementation, the configuration message further includes a token token ID, the token ID is configured in the interrupt address table, and the token ID is used by the host to perform security verification on the interrupt address; and each second entry further includes one token ID.

In a feasible implementation, the node device includes one or more of the following: a graphics card, a hard disk, a network interface card, and an audio card.

According to a third aspect, this application provides an interrupt reporting apparatus. The apparatus performs communication through a bus system, and the apparatus stores an interrupt vector table and an interrupt address table. The apparatus includes: an obtaining unit, configured to obtain an interrupt event; a processing unit, configured to generate an interrupt message of the interrupt event, where the interrupt message includes an interrupt vector and an interrupt address, the interrupt vector is obtained from the interrupt vector table, and the interrupt address is obtained from the interrupt address table; and a transceiver unit, configured to send the interrupt message to a network node through the bus system.

In a feasible implementation, the interrupt vector table includes multiple first entries entries each including one interrupt vector and corresponding to one interrupt event; the interrupt address table includes at least one second entry entry each including one interrupt address; and the multiple first entries include M first entries, the M first entries correspond to M interrupt events, the M interrupt events correspond to a same second entry in the at least one second entry, and M is a positive integer greater than or equal to 2.

In a feasible implementation, the interrupt vector table includes an address index corresponding to the interrupt vector, and the interrupt address is obtained from the interrupt address table based on the address index.

In a feasible implementation, each second entry further includes a destination number destination ID, and the destination ID indicates the network node to which the interrupt message including the destination ID is sent; and the interrupt message further includes the destination ID.

In a feasible implementation, each second entry further includes a token token ID, and the token ID is used by the network node to perform security verification on the interrupt address; and the interrupt message further includes the token ID.

According to a fourth aspect, this application provides an interrupt configuration apparatus. The apparatus performs communication through a bus system, and the apparatus includes: a processing unit, configured to generate a configuration message of an interrupt event, where the configuration message includes an interrupt vector and an interrupt address, the interrupt vector is configured in an interrupt vector table on a node device, the interrupt address is configured in an interrupt address table on the node device, and the node device communicates with the apparatus through the bus system; and a transceiver unit, configured to send the configuration message to the node device through the bus system.

In a feasible implementation, the interrupt vector table includes multiple first entries entries each including one interrupt vector and corresponding to one interrupt event; the interrupt address table includes at least one second entry entry each including one interrupt address; and the multiple first entries include M first entries, the M first entries correspond to M interrupt events, the M interrupt events correspond to a same second entry in the at least one second entry, and M is a positive integer greater than or equal to 2.

In a feasible implementation, the interrupt vector table further includes an address index corresponding to the interrupt vector, and the address index points to the interrupt address in the interrupt address table.

In a feasible implementation, the configuration message further includes a destination number destination ID, the destination ID is configured in the interrupt address table, and the destination ID indicates a network node to which an interrupt message including the destination ID is sent; and each second entry further includes one destination ID.

In a feasible implementation, the configuration message further includes a token token ID, the token ID is configured in the interrupt address table, and the token ID is used by the host to perform security verification on the interrupt address; and each second entry further includes one token ID.

According to a fifth aspect, this application provides a network node. The network node includes at least one processor, a memory, and an interface circuit. The memory, the interface circuit, and the at least one processor are interconnected through a line. The memory stores instructions. When the instructions are executed by the processor, the method according to any one of the foregoing second aspect is implemented.

According to a sixth aspect, this application provides a network node. The network node includes a processing circuit, a memory, and an interface circuit. The memory, the interface circuit, and the processing circuit are interconnected through a line. The memory stores instructions. When the instructions are executed by the processing circuit, the method according to any one of the foregoing first aspect is implemented.

According to a seventh aspect, an embodiment of this application provides a chip system. The chip system includes at least one processor, a memory, and an interface circuit. The memory, the interface circuit, and the at least one processor are interconnected through a line. The at least one memory stores instructions. When the instructions are executed by the processor, the method according to any one of the foregoing second aspect is implemented.

According to an eighth aspect, an embodiment of this application provides a chip system. The chip system includes a processing circuit, a memory, and an interface circuit. The memory, the interface circuit, and the processing circuit are interconnected through a line. The at least one memory stores instructions. When the instructions are executed by the processing circuit, the method according to any one of the foregoing first aspect is implemented.

According to a ninth aspect, this application provides a server. The server includes at least one network node in the fifth aspect and at least one network node in the sixth aspect.

According to a tenth aspect, this application provides a server. The server includes at least one chip system in the seventh aspect and at least one chip system in the eighth aspect.

According to an eleventh aspect, this application provides a distributed system. The distributed system includes at least two servers in the ninth aspect or the tenth aspect.

According to a twelfth aspect, an embodiment of this application provides a computer-readable storage medium. The computer-readable storage medium stores a computer program. When the computer program is executed, the method according to any one of the foregoing first aspect and/or the foregoing second aspect is implemented.

According to a thirteenth aspect, an embodiment of this application provides a computer program product. The computer program includes instructions. When the computer program is executed, the method according to any one of the foregoing first aspect and/or the foregoing second aspect is implemented.

### BRIEF DESCRIPTION OF DRAWINGS

The following describes accompanying drawings used in embodiments of this application.
FIG. 1 is a diagram of an architecture of a distributed system according to an embodiment of this application;
FIG. 2 is a diagram of a system architecture of a computer device according to an embodiment of this application;
FIG. 3 is a diagram of a system architecture of another computer device according to an embodiment of this application;
FIG. 4 is a flowchart of an interrupt configuration method according to an embodiment of this application;
FIG. 5 is a diagram of a data organization form on a node device according to an embodiment of this application;
FIG. 6 is a diagram of logical structures of an interrupt vector table and an interrupt address table according to an embodiment of this application;
FIG. 7 is a flowchart of an interrupt reporting method according to an embodiment of this application;
FIG. 8 is a diagram of a structure of an interrupt reporting apparatus according to an embodiment of this application;
FIG. 9 is a diagram of a structure of an interrupt configuration apparatus according to an embodiment of this application;
FIG. 10 is a diagram of a hardware structure of a network node according to an embodiment of this application; and
FIG. 11 is a diagram of a hardware structure of another network node according to an embodiment of this application.

### DESCRIPTION OF EMBODIMENTS

The following describes embodiments of this application with reference to the accompanying drawings in embodiments of this application. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "multiple" means two or more than two.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. "Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

The following describes terms in this application.
(1) Interrupt interrupt: When a network node (including a host host and another node device) executes a current program, the network node suspends, in the occurrence of an emergency in a system, the program that is being executed, and executes another special program (usually referred to as an interrupt service routine) to handle the emergency transaction (the emergency transaction is an interrupt event reported by a node device to the network node in this application). After handling of the interrupt event is completed, the network node automatically returns to the originally suspended program to continue execution. Such a case in which an execution process is interrupted due to an external reason is referred to as an interrupt.
(2) A function entity (Function Entity) is a function component, which is a minimum granularity addressable by a bus system. The function entity can initiate or respond to a transaction operation and can be managed. Specifically, the function entity is represented as a hardware module on the node device, and can independently report an interrupt.
(3) A host host, also referred to as a system on a chip (System on a Chip, SoC), is an integrated circuit including a processor, a memory, and on-chip logic.
(4) An interrupt vector (Interrupt Vector) is an entry address of the interrupt service routine. When reporting the interrupt event to the network node, the network node may invoke the interrupt service routine based on the interrupt vector, to execute a transaction that currently needs to be urgently handled.
(5) An interrupt address (Interrupt Address) is a storage address used to store the foregoing interrupt vector in an interrupt reporting process.
(6) Interrupt vector table (Interrupt Vector Table): In this application, each function entity corresponds to multiple interrupt events, and each function entity also corresponds to one interrupt vector table. The interrupt vector table is used to store a part of interrupt data of each interrupt event in the multiple interrupt events. Specifically, the part of interrupt data includes an interrupt vector, a mask mask state, an address index pointing to an interrupt address, and the like.
(7) Interrupt address table (Interrupt Address Table): In this application, each function entity corresponds to multiple interrupt events, and corresponds to one interrupt address table. The interrupt address table is used to store a part of interrupt data of each interrupt event in the multiple interrupt events. The part of interrupt data includes an interrupt address, a token token ID, a destination number (destination ID, Dst ID), a valid number valid ID, and the like.
(8) A high-speed serial computer expansion bus standard (Peripheral Component Interconnect Express, PCIe) belongs to a high-speed serial point-to-point dual-channel high-bandwidth transmission protocol. Exclusive channel bandwidth is allocated to devices connected according to this protocol, and the devices connected according to this protocol do not share bus bandwidth. Functions such as active power management, error reporting, end-to-end reliable transmission, hot swap, and quality of service (Quality of Service, QoS) are mainly supported. A PCIe device is directly connected to a PCIe bus, so that a cache and data are closer to a CPU. Compared with a conventional storage protocol, this can effectively reduce a latency.
(9) A network node is a host host or a node device in a computer device. In this application, the computer device may be a mobile phone, a computer, a tablet, an automotive head unit, a server, a wearable device, or the like.

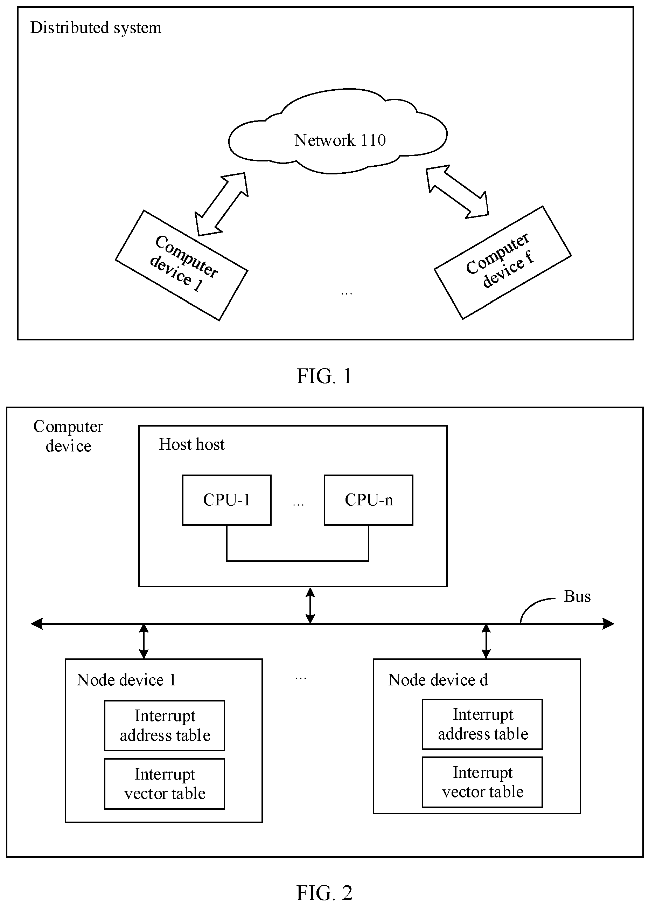

FIG. 1 is a diagram of an architecture of a distributed system according to an embodiment of this application. All or a part of computer devices in the architecture may be configured to perform an interrupt reporting method and an interrupt configuration method in this application.

As shown in FIG. 1, the distributed system includes f computer devices (a computer device 1, ..., and a computer device f), where f is a positive integer greater than or equal to 2. The f computer devices communicate with each other via a network 110.

For a system architecture of each of the f computer devices, refer to FIG. 2.

As shown in FIG. 2, the system architecture of the computer device includes a host host, multiple node devices (a node device 1, ..., and a node device d), and a bus (also referred to as a bus (Universal Bus, UB) system) that connects the host and the node devices, where d is a positive integer.

The host includes multiple processor cores, that is, a CPU-1, ..., and a CPU-n, where n is a positive integer. In addition, the host may further include a memory (not shown in FIG. 1).

As shown in FIG. 2, each node device includes an interrupt vector table and an interrupt address table. The interrupt vector table is used to store an interrupt vector corresponding to each interrupt event, and the interrupt address table is used to store an interrupt address corresponding to each interrupt event.

The following describes, with reference to FIG. 1 and FIG. 2, an interrupt mechanism implemented in this application, including two parts: interrupt data configuration and interrupt reporting.

### (1) Interrupt data configuration

First, the host on the computer device generates interrupt data of an interrupt event, including an interrupt vector, an interrupt address, a mask state, a Dst ID, a token ID, a valid ID, and the like. Then, a driver on the host sends the interrupt data to a corresponding node device in a form of a configuration message through the bus system, and then the node device configures the received interrupt data into a memory on the node device.

Each node device maintains two types of logical tables: the interrupt address table and the interrupt vector table. The two types of tables are used to store the interrupt data of the interrupt event. The interrupt address table is used to store data such as the interrupt address, the Dst ID, the token ID, and the valid ID in the interrupt data. The interrupt vector table is used to store data such as the interrupt vector and the mask state in the interrupt data. In addition, the interrupt vector table further stores an address index pointing to the interrupt address.

In the foregoing interrupt data configuration process, the host on each computer device indicates the node device on the computer device to complete configuration.

### (2) Interrupt reporting

When the interrupt event is generated on the node device, the node device first obtains, from the interrupt vector table, data such as the interrupt vector, the address index, and the mask state that correspond to the interrupt event, and then obtains, from the interrupt address table based on the address index, the data such as the interrupt address, the Dst ID, the token ID, and the valid ID that correspond to the interrupt event.

Then, data such as the interrupt vector, the mask state, the interrupt address, the Dst ID, the token ID, and the valid ID is sent to a network node (including the node device and the host host) indicated by the Dst ID in a form of an interrupt message, to complete reporting of the interrupt event.

The network node to which the interrupt message is sent may be a local network node, or a network node on another computer device that is connected to the local computer device via a network. When the interrupt message is sent to the local network node, the method in embodiments of this application may be applied to a single computer device. When the interrupt message is sent to the network node on the another computer device, the method in embodiments of this application may be applied to the distributed system.

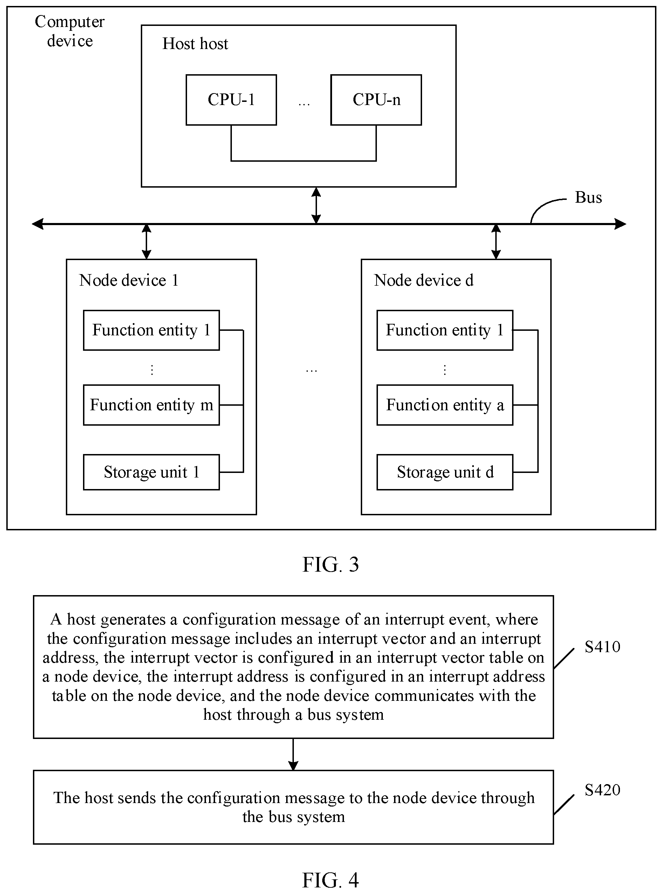

FIG. 3 is a diagram of a system architecture of another computer device according to an embodiment of this application, and is used to further refine the system architecture of the computer device in FIG. 2. Specifically, each node device may support multiple function entities.

As shown in FIG. 3, the computer device includes d node devices, where d is a positive integer. Each node device includes at least one function entity. For example, a node device 1 includes m function entities and a storage unit 1, and a node device d includes a function entities and a storage unit d, where m and a are positive integers.

Each function entity corresponds to multiple interrupt events, and each function entity further corresponds to an interrupt vector table and an interrupt address table. The interrupt vector table and the interrupt address table are used to store a part or all of interrupt data of each interrupt event in the multiple interrupt events. The interrupt address table and the interrupt vector table that correspond to each function entity are located in a storage unit on a node device in which the function entity is located.

The interrupt vector table and the interrupt address table described in this embodiment of this application are an interrupt vector table and an interrupt address table that correspond to any function entity on the node device.

It should be understood that FIG. 2 and FIG. 3 are merely examples of system architectures of the computer device provided in this application, and constitute no limitation on a quantity of corresponding modules, a connection manner, or the like. For example, FIG. 3 shows only one storage unit on each node device, which does not constitute any limitation on a quantity of storage units on the node device.

Optionally, the computer devices in FIG. 1 to FIG. 3 may be mobile phones, computers, tablets, automotive head units, servers, wearable devices, or the like. This is not limited in this application.

Optionally, processors on hosts hosts in FIG. 2 and FIG. 3 may be single-core processors, multi-core processors, heterogeneous processors, or the like. This is not limited in this application.

Optionally, the node devices in FIG. 2 and FIG. 3 may be devices such as graphics cards, network interface cards, audio cards, mechanical hard disks, solid-state disks, keyboards, or mouse devices.

Optionally, storage units on the node devices in FIG. 2 and FIG. 3 may be registers, register groups, or other readable and writable storages.

FIG. 4 is a flowchart of an interrupt configuration method according to an embodiment of this application. The interrupt configuration method may be applied to the system architectures shown in FIG. 1 to FIG. 3. The method includes step S410 and step S420.

Step S410: The host generates a configuration message of an interrupt event, where the configuration message includes an interrupt vector and an interrupt address, the interrupt vector is configured in an interrupt vector table on a node device, the interrupt address is configured in an interrupt address table on the node device, and the node device communicates with the host through the bus system.

Specifically, for each interrupt event, the host host generates interrupt data of the interrupt event, and then encapsulates the interrupt data into a configuration message. The configuration message corresponding to each interrupt event includes data such as an interrupt vector and an interrupt address.

The following uses any two interrupt events (a first interrupt event and a second interrupt event) corresponding to any function entity (hereinafter referred to as a first function entity) as objects to describe delivery of the interrupt data and a feasible configuration process:

The first function entity corresponds to a first interrupt address table and a first interrupt vector table on the node device, and the first interrupt address table and the first interrupt vector table are used to store a part or all of interrupt data of multiple interrupt events corresponding to the first function entity.

First, the node device receives a first configuration message, of the first interrupt event, delivered by the host host. The first configuration message includes a first interrupt vector and a first interrupt address, and the first interrupt address is different from an existing interrupt address in the first interrupt address table.

Because the first interrupt address does not exist in the first interrupt address table, in this case, the first interrupt address is stored in an initialized entry entry in the first interrupt address table. Then, a first address index pointing to the entry is generated, and the first address index and the first interrupt vector are correspondingly stored in the initialized entry entry in the first interrupt vector table.

Then, the node device receives a second configuration message, of the second interrupt event, delivered by the host host. The second configuration message includes a second interrupt vector and a second interrupt address, and the second interrupt address is the same as the first interrupt address.

Because the second interrupt address is the same as the first interrupt address, in this case, the interrupt address does not need to be stored in the first interrupt address table again, and the first address index and the second interrupt vector are directly correspondingly stored in an entry entry in the first interrupt vector table. If an entry that includes the first address index and the second interrupt vector already exists in the first interrupt vector table, repeated storage is not required.

Optionally, the node device stores a start storage address, an interrupt vector table offset interrupt vector table offset, and an interrupt address table offset interrupt address table offset that correspond to the first function entity.

The start storage address indicates a start storage address of interrupt data of the multiple interrupt events corresponding to the first function entity. The interrupt vector table offset is an offset of a start storage address, of the interrupt vector table, relative to a start storage address of the first function entity. The interrupt address table offset is an offset of a start storage address, of the interrupt address table, relative to the start storage address of the first function entity.

In the foregoing interrupt data configuration process, each piece of interrupt data is configured in the interrupt address table and the interrupt vector table based on the start storage address, the interrupt vector table offset, and the interrupt address table offset of the first function entity.

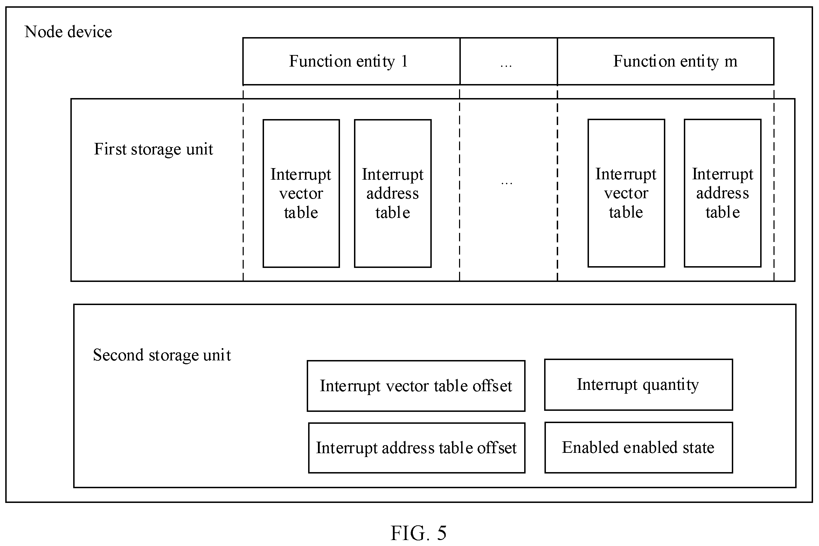

FIG. 5 is a diagram of a data organization form on a node device according to an embodiment of this application, and is used as an example of a data storage manner.

As shown in FIG. 5, the node device includes m function entities, and each of the function entities corresponds to one interrupt address table and one interrupt vector table in a first storage unit.

The first storage unit is configured to store interrupt data of each interrupt event. Interrupt data of each interrupt event in multiple interrupt events corresponding to each function entity is stored in an interrupt vector table and an interrupt address table that correspond to the function entity. The first storage unit may be MMIO space on the node device.

A second storage unit is configured to store data such as the interrupt vector table offset, the interrupt address table offset, an interrupt quantity, and an enabled enabled state.

The enabled enabled state indicates whether the interrupt data stored in the first storage unit is used.

The second storage unit may be referred to as configuration space configuration space.

The following describes in detail data organization forms/logical structures of the interrupt vector table and the interrupt address table after the process of configuring the interrupt data of the interrupt event is completed in the foregoing manner.

### (1) Interrupt vector table (each entry in the interrupt vector table is referred to as a first entry)

The interrupt vector table includes multiple first entries entries each including one interrupt vector and corresponding to one interrupt event.

Each first entry entry corresponding to one interrupt event means that a part of interrupt data of each interrupt event is stored in one first entry entry.

### (2) Interrupt address table (each entry entry in the interrupt address table is referred to as a second entry entry)

The interrupt address table includes at least one second entry entry, each second entry entry includes one interrupt address, and the at least one second entry entry corresponds to multiple interrupt events.

If one second entry entry corresponds to multiple interrupt events, a part of interrupt data of each interrupt event in the multiple interrupt events is stored in the second entry entry.

### (3) Correspondence between the interrupt vector table and the interrupt address table

The multiple first entries entries include M first entries entries, the M first entries entries correspond to M interrupt events, the M interrupt events correspond to a same second entry entry in the at least one second entry entry, and M is a positive integer greater than or equal to 2.

That is, there is at least one first entry entry in the interrupt vector table, and at least one interrupt event corresponding to the at least one first entry entry corresponds to a same second entry entry in the interrupt address table.

It can be learned that, in the foregoing interrupt data configuration manner (to be specific, the interrupt address and the interrupt vector are stored in different tables), if interrupt addresses in interrupt data of different interrupt events are the same, the interrupt data may be combined and stored in the interrupt address table, that is, the interrupt data is stored only once. In this manner, storage space required by the interrupt data of the interrupt event can be effectively saved. In this way, more interrupts can be configured on the node device with given storage space on the node device, thereby effectively improving service performance.

Optionally, the interrupt vector table further includes an address index corresponding to the interrupt vector, and the address index points to the interrupt address in the interrupt address table.

Specifically, an interrupt vector of each interrupt event corresponds to one address index in the interrupt vector table, and the interrupt vector and the address index are stored in a same first entry entry.

Optionally, the configuration message further includes a destination number destination ID, the destination ID is configured in the interrupt address table, and the destination ID indicates a network node to which an interrupt message including the destination ID is sent.

Specifically, the host generates the destination number Dst ID of the interrupt event, and then encapsulates the destination number Dst ID into the configuration message of the interrupt event. After receiving the configuration message, the node device stores the Dst ID and the interrupt address in a same entry in the interrupt address table, that is, each second entry entry further includes one Dst ID.

In a subsequent process of reporting an interrupt by the node device, the Dst ID is encapsulated into the interrupt message generated by the node device, and is sent to the network node through the bus system. The Dst ID indicates the network node to which the interrupt message is sent.

Optionally, the configuration message further includes a token token ID, the token ID is configured in the interrupt address table, and the token ID is used by the host to perform security verification on the interrupt address.

Specifically, the host generates the token ID of the interrupt event, and then encapsulates the token ID into the configuration message of the interrupt event. After receiving the configuration message, the node device stores the token ID and the interrupt address in a same entry in the interrupt address table, that is, each second entry entry further includes one token ID.

In the subsequent process of reporting the interrupt by the node device, the token ID is encapsulated into the interrupt message generated by the node device, and is sent to the network node through the bus system. After receiving the interrupt message, the network node uses the token ID to perform security verification and address translation on the interrupt address to ensure data security.

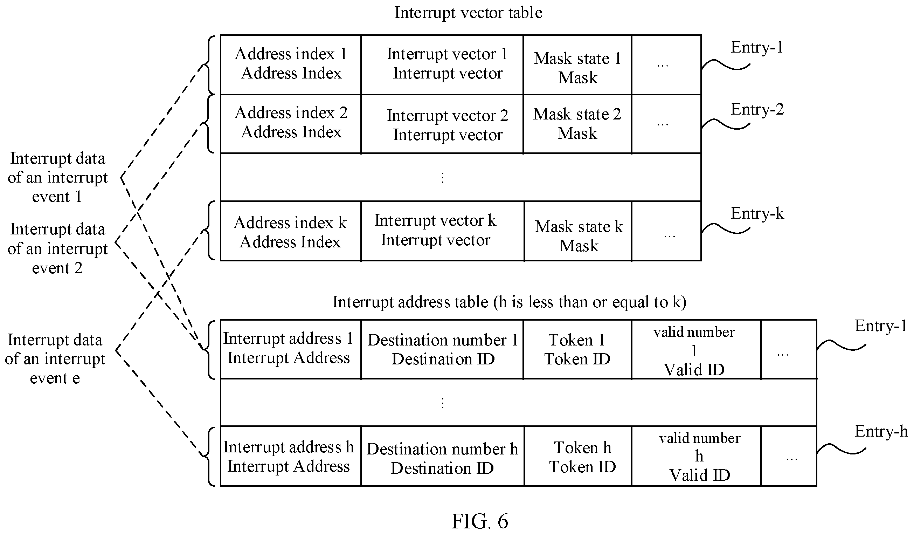

FIG. 6 is a diagram of logical structures of an interrupt vector table and an interrupt address table according to an embodiment of this application, and constitutes an example of the interrupt vector table, the interrupt address table, and a relationship between the interrupt vector table and the interrupt address table.

As shown in FIG. 6, the interrupt vector table includes k entries entries (that is, the at least one first entry entry in the foregoing embodiment), and each entry entry in the k entries corresponds to one interrupt event. Data in each entry in the k entries includes an address index, an interrupt vector, a mask state, and the like, where k is a positive integer. A function of the mask mask state is the same as that of a mask state in an existing interrupt mechanism. Details are not described in this application.

The interrupt address table includes h entries entries (that is, the at least one second entry entry in the foregoing embodiment). In the h entries, at least one entry entry corresponds to multiple interrupt events. Data in each entry entry in the h entries includes an interrupt address, a destination number, a token, valid number, and the like, where h is a positive integer less than or equal to k. A function of the valid number valid ID is the same as that of a valid ID in the existing interrupt mechanism. Details are not described in this application.

In the example shown in FIG. 6, interrupt data of an interrupt event 1 is configured in an entry-1 in the interrupt vector table and an entry-1 in the interrupt address table; interrupt data of an interrupt event 2 is configured in an entry-2 in the interrupt vector table and the entry-1 in the interrupt address table; and interrupt data of an interrupt event e is configured in an entry-k in the interrupt vector table and an entry-h in the interrupt address table.

That is, the entry-1 in the interrupt vector table corresponds to the interrupt event 1, the entry-2 in the interrupt vector table corresponds to the interrupt event 2, and the entry-k in the interrupt vector table corresponds to the interrupt event e. The entry-1 in the interrupt address table corresponds to the interrupt event 1 and the interrupt event 2, and the entry-h in the interrupt address table corresponds to the interrupt event e.

Step S420: The host sends the configuration message to the node device through the bus system.

Specifically, after generating the configuration message of the interrupt event, the host sends the configuration message of the interrupt event to the corresponding node device through the bus system.

After the interrupt data of the interrupt event is configured for the node device based on the description in the foregoing embodiment, the following embodiment mainly describes a process in which the node device generates an interrupt message based on the configured interrupt data and reports an interrupt.

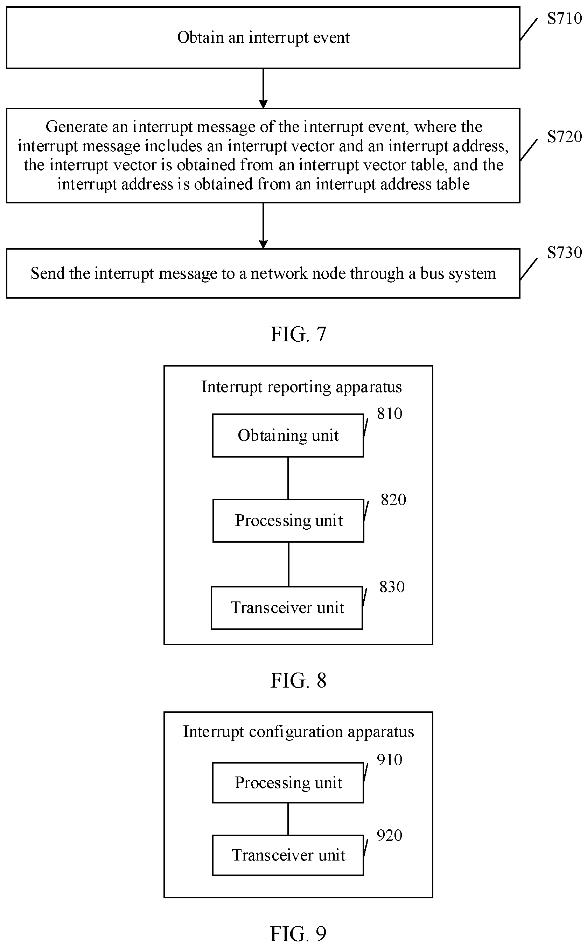

FIG. 7 is a flowchart of an interrupt reporting method according to this application. The method is applied to the node device in FIG. 2 and FIG. 3. It can be learned from the interrupt data configuration process in the foregoing embodiment that each node device maintains an interrupt vector table and an interrupt address table. The method includes step S710, step S720, and step S730.

Step S710: Obtain an interrupt event.

Specifically, in a running process, the node device generates the interrupt event. In this case, the interrupt event needs to be reported to a corresponding network node, so that the network node suspends a program that is currently being executed, and starts to execute an interrupt service routine corresponding to the interrupt event.

For example, the node device may be a hard disk. After the hard disk finishes storing a segment of data, an interrupt event is generated, and the interrupt event is reported to a host host, so that the host host knows a progress of data storage on the hard disk, and executes a corresponding interrupt service routine.

Step S720: Generate an interrupt message of the interrupt event, where the interrupt message includes an interrupt vector and an interrupt address, the interrupt vector is obtained from an interrupt vector table, and the interrupt address is obtained from an interrupt address table.

Specifically, after the node device generates the interrupt event, the node device generates the interrupt message of the interrupt event. Because interrupt data of the interrupt event that needs to be reported has been configured in the interrupt vector table and the interrupt address table on the node device, corresponding data may be obtained from the interrupt vector table and the interrupt address table, to generate the interrupt message of the interrupt event.

Based on the foregoing embodiment of the interrupt data configuration process, it can be learned that data organization forms/logical structures of the interrupt vector table and the interrupt address table are as follows:

The interrupt vector table includes multiple first entries entries each including one interrupt vector and corresponding to one interrupt event. The interrupt address table includes at least one second entry entry each including one interrupt address.

The multiple first entries entries include M first entries entries, the M first entries entries correspond to M interrupt events, the M interrupt events correspond to a same second entry entry in the at least one second entry entry, and M is a positive integer greater than or equal to 2.

Optionally, the interrupt vector table includes an address index corresponding to the interrupt vector, and the interrupt vector and the address index are stored in a same first entry entry in the interrupt vector table.

Optionally, each second entry entry further includes a destination number Dst ID.

Optionally, each second entry entry further includes one token token ID.

After generating the interrupt event, the node device obtains an interrupt vector from a first entry entry based on the first entry entry corresponding to the interrupt event in the interrupt vector table, finds, based on the address index included in the first entry entry, a second entry entry corresponding to the interrupt event in the interrupt address table, and obtains the interrupt address from the second entry entry. Then, the interrupt vector and the interrupt address are encapsulated to generate the interrupt message of the interrupt event, and the interrupt message is sent to the corresponding network node.

Optionally, the node device further obtains a Dst ID from the second entry entry in which the interrupt address is located, and also encapsulates the Dst ID into the interrupt message.

The Dst ID indicates the network node to which the interrupt message is sent.

Optionally, the node device further obtains a token ID from the second entry entry in which the interrupt address is located, and also encapsulates the token ID into the interrupt message.

The token ID is used by the network node that receives the interrupt message to perform security verification and address translation on the interrupt address included in the interrupt message.

Step S730: Send the interrupt message to the network node through a bus system.

After generating the interrupt message of the interrupt event, the node device sends the interrupt message to the network node indicated by the Dst ID. The network node may be a network node on a local computer device or a network node on another computer device, and the another computer device communicates with the local computer device via a network.

The network node includes a node device and a host host on a computer device.

FIG. 8 is a diagram of a structure of an interrupt reporting apparatus according to an embodiment of this application. The apparatus stores an interrupt vector table and an interrupt address table. As shown in FIG. 8, the apparatus includes an obtaining unit 810, a processing unit 820, and a transceiver unit 830.

The obtaining unit 810 is configured to obtain an interrupt event. The processing unit 820 is configured to generate an interrupt message of the interrupt event. The interrupt message includes an interrupt vector and an interrupt address, the interrupt vector is obtained from the interrupt vector table, and the interrupt address is obtained from the interrupt address table. The transceiver unit 830 is configured to send the interrupt message to a network node through a bus system.

In a feasible implementation, the interrupt vector table includes multiple first entries entries each including one interrupt vector and corresponding to one interrupt event; the interrupt address table includes at least one second entry entry each including one interrupt address; and the multiple first entries include M first entries, the M first entries correspond to M interrupt events, the M interrupt events correspond to a same second entry in the at least one second entry, and M is a positive integer greater than or equal to 2.

In a feasible implementation, the interrupt vector table includes an address index corresponding to the interrupt vector, and the interrupt address is obtained from the interrupt address table based on the address index.

In a feasible implementation, each second entry further includes a destination number destination ID, and the destination ID indicates the network node to which the interrupt message including the destination ID is sent; and the interrupt message further includes the destination ID.

In a feasible implementation, each second entry further includes a token token ID, and the token ID is used by the network node to perform security verification on the interrupt address; and the interrupt message further includes the token ID.

Specifically, for a specific execution process of the apparatus, refer to the execution procedure corresponding to the method embodiment in the foregoing embodiments. Details are not described herein again.

FIG. 9 is a diagram of a structure of an interrupt configuration apparatus according to an embodiment of this application. As shown in FIG. 9, the apparatus includes a processing unit 910 and a transceiver unit 920.

The processing unit 910 is configured to generate a configuration message of an interrupt event, where the configuration message includes an interrupt vector and an interrupt address, the interrupt vector is configured in an interrupt vector table on a node device, the interrupt address is configured in an interrupt address table on the node device, and the node device communicates with the apparatus through a bus system. The transceiver unit 920 is configured to send the configuration message to the node device through the bus system.

In a feasible implementation, the interrupt vector table includes multiple first entries entries each including one interrupt vector and corresponding to one interrupt event; the interrupt address table includes at least one second entry entry each including one interrupt address; and the multiple first entries include M first entries, the M first entries correspond to M interrupt events, the M interrupt events correspond to a same second entry in the at least one second entry, and M is a positive integer greater than or equal to 2.

In a feasible implementation, the interrupt vector table further includes an address index corresponding to the interrupt vector, and the address index points to the interrupt address in the interrupt address table.

In a feasible implementation, the configuration message further includes a destination number destination ID, the destination ID is configured in the interrupt address table, and the destination ID indicates a network node to which an interrupt message including the destination ID is sent; and each second entry further includes one destination ID.

In a feasible implementation, the configuration message further includes a token token ID, the token ID is configured in the interrupt address table, and the token ID is used by the host to perform security verification on the interrupt address; and each second entry further includes one token ID.

Specifically, for a specific execution process of the apparatus, refer to the execution procedure corresponding to the method embodiment in the foregoing embodiments. Details are not described herein again.

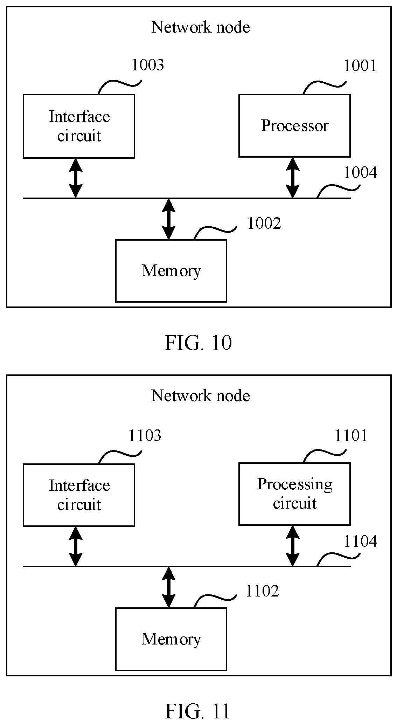

FIG. 10 is a diagram of a hardware structure of a network node according to an embodiment of this application. The network node may be used as a possible specific implementation of the apparatus (namely, the host host in the foregoing method embodiment) in FIG. 9. The network node includes a processor 1001, a memory 1002, and an interface circuit 1003. The memory 1002, the interface circuit 1003, and the processor 1001 are interconnected through a line 1004.

The processor 1001 is configured to generate a configuration message of an interrupt event, where the configuration message includes an interrupt vector and an interrupt address, the interrupt vector is configured in an interrupt vector table on a node device, the interrupt address is configured in an interrupt address table on the node device, and the node device communicates with the apparatus through a bus system. The interface circuit 1003 is configured to send the configuration message to the node device through the bus system.

Specifically, for a specific execution process of the foregoing network node, refer to the execution procedure in the foregoing method embodiment in FIG. 4. Details are not described herein again.

FIG. 11 is a diagram of a hardware structure of another network node according to an embodiment of this application. The network node may be used as a possible specific implementation of the apparatus (namely, the node device in the foregoing method embodiment) in FIG. 8. The network node includes a processing circuit 1101, a memory 1102, and an interface circuit 1103. The memory 1102, the interface circuit 1103, and the processing circuit 1101 are interconnected through a line 1104.

The memory 1102 is configured to store an interrupt vector table and an interrupt address table. The processing circuit 1101 is configured to: obtain an interrupt event, and generate an interrupt message of the interrupt event, where the interrupt message includes an interrupt vector and an interrupt address, the interrupt vector is obtained from the interrupt vector table, and the interrupt address is obtained from the interrupt address table. The interface circuit 1103 is configured to send the interrupt message to the network node through a bus system.

Specifically, for a specific execution process of the foregoing network node, refer to the execution procedure in the foregoing method embodiment in FIG. 7. Details are not described herein again.

An embodiment of this application provides a chip system. The chip system includes at least one processor, a memory, and an interface circuit. The memory, the interface circuit, and the at least one processor are interconnected through a line. The at least one memory stores instructions. When the instructions are executed by the processor, some or all of the steps recorded in the method embodiment in FIG. 4 are implemented.

An embodiment of this application provides a chip system. The chip system includes a processing circuit, a memory, and an interface circuit. The memory, the interface circuit, and the processing circuit are interconnected through a line. The at least one memory stores instructions. When the instructions are executed by the processing circuit, some or all of the steps recorded in the method embodiment in FIG. 7 are implemented.

An embodiment of this application provides a server. The server includes the network nodes described in the embodiments in FIG. 10 and FIG. 11.

An embodiment of this application provides a server. The server includes a chip system configured to implement the method embodiments in FIG. 4 and FIG. 7.

An embodiment of this application provides a computer device. The computer device includes at least one network node in FIG. 10 and at least one network node in FIG. 11.

This application provides a distributed system. The distributed system includes at least two computer devices described in the foregoing embodiment.

An embodiment of this application provides a computer storage medium. The computer storage medium stores a computer program. When the computer program is executed, some or all of the steps recorded in the foregoing method embodiment are implemented.

An embodiment of this application provides a computer program product. The computer program includes instructions. When the computer program is executed by a processor, some or all of the steps recorded in the foregoing method embodiment are implemented.

In the foregoing embodiments, the description of each embodiment has respective focuses. For a part that is not described in detail in an embodiment, refer to related descriptions in other embodiments. It should be noted that, for ease of description, the foregoing method embodiments are represented as a series of action combinations. However, a person skilled in the art should appreciate that this application is not limited to the described action order, because according to this application, some steps may be performed in another order or simultaneously. It should be further appreciated by a person skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on multiple network units. Some or all of the units may be selected based on actual requirements to achieve the objectives of the solutions of embodiments.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An interrupt reporting method, applied to a node device that performs communication through a bus system, wherein the node device comprises an interrupt vector table and an interrupt address table, and the method comprises:
obtaining an interrupt event;
generating an interrupt message of the interrupt event, wherein the interrupt message comprises an interrupt vector and an interrupt address, the interrupt vector is obtained from the interrupt vector table, and the interrupt address is obtained from the interrupt address table; and
sending the interrupt message to a network node through the bus system.

2. The method according to claim 1, wherein
the interrupt vector table comprises multiple first entries entries each comprising one interrupt vector and corresponding to one interrupt event;
the interrupt address table comprises at least one second entry entry each comprising one interrupt address; and
the multiple first entries comprise M first entries, the M first entries correspond to M interrupt events, the M interrupt events correspond to a same second entry in the at least one second entry, and M is a positive integer greater than or equal to 2.

3. The method according to claim 1 or 2, wherein
the interrupt vector table comprises an address index corresponding to the interrupt vector, and the interrupt address is obtained from the interrupt address table based on the address index.

4. The method according to claim 2 or 3, wherein each second entry further comprises a destination number destination ID, and the destination ID indicates the network node to which the interrupt message comprising the destination ID is sent; and
the interrupt message further comprises the destination ID.

5. The method according to any one of claims 2 to 4, wherein each second entry further comprises a token token ID, and the token ID is used by the network node to perform security verification on the interrupt address; and
the interrupt message further comprises the token ID.

6. The method according to any one of claims 1 to 5, wherein the node device comprises one or more of the following: a graphics card, a hard disk, a network interface card, and an audio card.

7. An interrupt configuration method, applied to a host host that performs communication through a bus system, wherein the method comprises:
generating a configuration message of an interrupt event, wherein the configuration message comprises an interrupt vector and an interrupt address, the interrupt vector is configured in an interrupt vector table on a node device, the interrupt address is configured in an interrupt address table on the node device, and the node device communicates with the host through the bus system; and
sending the configuration message to the node device through the bus system.

8. The method according to claim 7, wherein
the interrupt vector table comprises multiple first entries entries each comprising one interrupt vector and corresponding to one interrupt event;
the interrupt address table comprises at least one second entry entry each comprising one interrupt address; and
the multiple first entries comprise M first entries, the M first entries correspond to M interrupt events, the M interrupt events correspond to a same second entry in the at least one second entry, and M is a positive integer greater than or equal to 2.

9. The method according to claim 7 or 8, wherein
the interrupt vector table further comprises an address index corresponding to the interrupt vector, and the address index points to the interrupt address in the interrupt address table.

10. The method according to claim 8 or 9, wherein
the configuration message further comprises a destination number destination ID, the destination ID is configured in the interrupt address table, and the destination ID indicates a network node to which an interrupt message comprising the destination ID is sent; and
each second entry further comprises one destination ID.

11. The method according to any one of claims 8 to 10, wherein
the configuration message further comprises a token token ID, the token ID is configured in the interrupt address table, and the token ID is used by the host to perform security verification on the interrupt address; and
each second entry further comprises one token ID.

12. The method according to any one of claims 7 to 11, wherein the node device comprises one or more of the following: a graphics card, a hard disk, a network interface card, and an audio card.

13. An interrupt reporting apparatus, wherein the apparatus performs communication through a bus system, and the apparatus stores an interrupt vector table and an interrupt address table; and the apparatus comprises:
an obtaining unit, configured to obtain an interrupt event;
a processing unit, configured to generate an interrupt message of the interrupt event, wherein the interrupt message comprises an interrupt vector and an interrupt address, the interrupt vector is obtained from the interrupt vector table, and the interrupt address is obtained from the interrupt address table; and
a transceiver unit, configured to send the interrupt message to a network node through the bus system.

14. The apparatus according to claim 13, wherein
the interrupt vector table comprises multiple first entries entries each comprising one interrupt vector and corresponding to one interrupt event;
the interrupt address table comprises at least one second entry entry each comprising one interrupt address; and
the multiple first entries comprise M first entries, the M first entries correspond to M interrupt events, the M interrupt events correspond to a same second entry in the at least one second entry, and M is a positive integer greater than or equal to 2.

15. The apparatus according to claim 13 or 14, wherein
the interrupt vector table comprises an address index corresponding to the interrupt vector, and the interrupt address is obtained from the interrupt address table based on the address index.

16. The apparatus according to claim 14 or 15, wherein each second entry further comprises a destination number destination ID, and the destination ID indicates the network node to which the interrupt message comprising the destination ID is sent; and
the interrupt message further comprises the destination ID.

17. The apparatus according to any one of claims 14 to 16, wherein each second entry further comprises a token token ID, and the token ID is used by the network node to perform security verification on the interrupt address; and
the interrupt message further comprises the token ID.

18. An interrupt configuration apparatus, wherein the apparatus performs communication through a bus system, and the apparatus comprises:
a processing unit, configured to generate a configuration message of an interrupt event, wherein the configuration message comprises an interrupt vector and an interrupt address, the interrupt vector is configured in an interrupt vector table on a node device, the interrupt address is configured in an interrupt address table on the node device, and the node device communicates with the apparatus through the bus system; and
a transceiver unit, configured to send the configuration message to the node device through the bus system.

19. The apparatus according to claim 18, wherein
the interrupt vector table comprises multiple first entries entries each comprising one interrupt vector and corresponding to one interrupt event;
the interrupt address table comprises at least one second entry entry each comprising one interrupt address; and
the multiple first entries comprise M first entries, the M first entries correspond to M interrupt events, the M interrupt events correspond to a same second entry in the at least one second entry, and M is a positive integer greater than or equal to 2.

20. The apparatus according to claim 18 or 19, wherein
the interrupt vector table further comprises an address index corresponding to the interrupt vector, and the address index points to the interrupt address in the interrupt address table.

21. The apparatus according to claim 19 or 20, wherein
the configuration message further comprises a destination number destination ID, the destination ID is configured in the interrupt address table, and the destination ID indicates a network node to which an interrupt message comprising the destination ID is sent; and
each second entry further comprises one destination ID.

22. The apparatus according to any one of claims 19 to 21, wherein
the configuration message further comprises a token token ID, the token ID is configured in the interrupt address table, and the token ID is used by the host to perform security verification on the interrupt address; and
each second entry further comprises one token ID.

23. A network node, wherein the network node comprises at least one processor, a memory, and an interface circuit, the memory, the interface circuit, and the at least one processor are interconnected through a line, the memory stores instructions, and when the instructions are executed by the processor, the method according to any one of claims 7 to 12 is implemented.

24. A network node, wherein the network node comprises a processing circuit, a memory, and an interface circuit, the memory, the interface circuit, and the processing circuit are interconnected through a line, the memory stores instructions, and when the instructions are executed by the processing circuit, the method according to any one of claims 1 to 6 is implemented.

25. A chip system, wherein the chip system comprises at least one processor, a memory, and an interface circuit, the memory, the interface circuit, and the at least one processor are interconnected through a line, the at least one memory stores instructions, and when the instructions are executed by the at least one processor, the method according to any one of claims 7 to 12 is implemented.

26. A chip system, wherein the chip system comprises a processing circuit, a memory, and an interface circuit, the memory, the interface circuit, and the processing circuit are interconnected through a line, the at least one memory stores instructions, and when the instructions are executed by the processing circuit, the method according to any one of claims 1 to 6 is implemented.

27. A server, wherein the server comprises the network nodes according to claim 23 and claim 24.

28. A server, wherein the server comprises the chip systems according to claim 25 and claim 26.

29. A computer-readable storage medium, wherein the computer-readable storage medium stores a computer program, and when the computer program is executed, the method according to any one of claims 1 to 6 or 7 to 12 is implemented.

30. A computer program product, wherein the computer program comprises instructions, and when the computer program is executed, the method according to any one of claims 1 to 6 or claims 7 to 12 is implemented.
